(19) Europäisches Patentamt

European Patent Office

Office européen des brevets

(11) **EP 4 592 221 A1**

(12) **EUROPEAN PATENT APPLICATION**
published in accordance with Art. 153(4) EPC

(43) Date of publication:
**30.07.2025 Bulletin 2025/31**

(21) Application number: **23871967.8**

(22) Date of filing: **14.09.2023**

(51) International Patent Classification (IPC):
***B65G 47/31*** *(2006.01)*

(52) Cooperative Patent Classification (CPC):
**B65G 47/31**

(86) International application number:
**PCT/JP2023/033558**

(87) International publication number:
**WO 2024/070734 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 JP 2022158630**

(71) Applicant: **Daifuku Co., Ltd.
Osaka-shi, Osaka 555-0012 (JP)**

(72) Inventors:
• **SHIKI, Kiyoshi
  Osaka-shi, Osaka 555-0012 (JP)**
• **TAKIMOTO, Takashi
  Kitakyushu-shi, Fukuoka 802-0001 (JP)**

(74) Representative: **Grosse Schumacher Knauer von
Hirschhausen
Patent- und Rechtsanwälte
Nymphenburger Strasse 14
80335 München (DE)**

(54) **ORIENTATION ADJUSTMENT APPARATUS**

(57) A control device (50) changes a speed difference (ΔSu) in accordance with the degree of a pre-adjustment orientation difference (ΔSu) as a difference between an upstream actual orientation (Su) detected by an upstream orientation detection device (30u) and an intended orientation (Sr), and increases the speed difference (ΔSu) as a characteristic value (H) indicative of a degree of difficulty of an orientation change which difficulty corresponds to a characteristic of a conveyance target (11) determined by a characteristic determination device (40) in orientation adjustment control for controlling a speed difference between a conveyance speed (V1) of a first conveyor part (21) and a conveyance speed (V2) of a second conveyor part (22) that are disposed in parallel to change the orientation of the conveyance target (11).

Fig.1

**Description**

Technical Field

The present invention relates to an orientation adjustment apparatus that adjusts the orientation of a conveyance target.

Background Art

An example of such an orientation adjustment apparatus is disclosed in Japanese Patent Application Laid-Open No. 2010-100398 (Patent Literature 1). Patent Literature 1 discloses an orientation adjustment apparatus that adjusts the orientation of a rectangular or square conveyance target by making speeds on right and left sides of a conveyance direction of an orientation adjustment conveyor different from each other with respect to a rectangular or square conveyance target. The orientation adjustment apparatus of Patent Literature 1 detects the orientation of the conveyance target with a CCD camera every moment and adjusts the orientation of the conveyance target every moment.

Citation List

Patent Literature

Patent Literature 1: Japanese Patent Application Laid-Open No. 2010-100398

Summary of Invention

Technical Problem

Although the apparatus described in Patent Literature 1 is on the assumption that adjustment of the orientation of a single type of conveyance target is performed, it may be necessary to adjust the orientations of a plurality of types of conveyance targets although depending on the purpose of use of the orientation adjustment apparatus. For example, in a case where a plurality of conveyance targets that are different from each other in characteristics such as the shape, the weight, and the material thereof are targets to be subjected to orientation adjustment, the degree of difficulty of changing the orientation may also differ depending on the characteristics of the conveyance targets. However, since the orientation adjustment apparatus described in Patent Literature 1 is on the assumption that adjustment of the orientation of a single type of conveyance target is performed, no particular consideration has been given to such a point. Therefore, a situation in which the orientation of a conveyance target is excessively changed may occur in a case where it is easy to change the orientation of the conveyance target due to the characteristics thereof or a situation in which the orientation of a conveyance target is insufficiently changed may occur in a case where it is difficult to change the orientation of the conveyance target due to the characteristics thereof.

Therefore, there is a demand for realization of a technique with which it is possible to appropriately perform orientation adjustment in accordance with the characteristics of each of a plurality of conveyance targets that are different in characteristics in a case where orientation adjustment of such conveyance targets needs to be performed.

Solution to Problem

In view of the description as above, there is provided an orientation adjustment apparatus that adjusts an orientation of a conveyance target, the orientation adjustment apparatus including: an orientation adjustment conveyor configured to adjust the orientation of the conveyance target while conveying the conveyance target along a prescribed conveyance direction; a characteristic determination device configured to determine at least one characteristic of the conveyance target on an upstream side with respect to the orientation adjustment conveyor; an upstream-side orientation detection device configured to detect the orientation of the conveyance target at an upstream-side end portion of the orientation adjustment conveyor; and a control device configured to control the orientation adjustment conveyor, in which the orientation adjustment conveyor includes a first conveyor part and a second conveyor part that are disposed in parallel to be adjacent to each other in a conveyance width direction and is configured to cause the first conveyor part and the second conveyor part to have respective conveyance speeds different from each other, the conveyance width direction being a direction orthogonal to the conveyance direction, the control device is configured to perform orientation adjustment control for controlling a speed difference between the respective conveyance speeds of the first conveyor part and the second conveyor part to change the orientation of the conveyance target that is conveyed in a state of being placed on both of the first conveyor and the second conveyor, the conveyance target has an intended orientation as an orientation intended at a downstream end portion of the orientation adjustment conveyor and an upstream actual orientation as an actual orientation that the upstream orientation detection device has detected, and the orientation adjustment control includes changing the speed difference in accordance with a degree of a pre-adjustment orientation difference as a difference between the upstream actual orientation and the intended orientation and increasing the speed difference with an increase in a characteristic value indicative of a degree of difficulty of an orientation change which difficulty corresponds to the at least one characteristic of the conveyance target determined by the characteristic determination device.

According to the present configuration, it is possible to perform appropriate orientation adjustment control in accordance with the characteristics of the conveyance target since speed differences at the first conveyor part and the second conveyor part are made different from each other for the orientation adjustment control based not only on the pre-adjustment orientation difference which is a difference between the upstream actual orientation and the target orientation but also on the characteristic value which is set in accordance with the characteristics of the conveyance target and which indicates the degree of difficulty of changing the orientation. Therefore, it is possible to appropriately perform orientation adjustment in accordance with the characteristics of each of a plurality of conveyance targets that are different in characteristics in a case where orientation adjustment of such conveyance targets needs to be performed.

Further features and advantages of the orientation adjustment apparatus will become apparent from the following description of embodiments, which will be described with reference to the drawings.

Brief Description of Drawings

Fig. 1 is a block diagram illustrating a control configuration of an orientation adjustment apparatus of a first embodiment;
Fig. 2 is a top view of an orientation adjustment conveyor of Fig. 1;
Fig. 3 is a view illustrating conveyance of a conveyance target with a long side having a large dimension, which is performed by the orientation adjustment conveyor of Fig. 1;
Fig. 4 is a view illustrating conveyance of a conveyance target with a long side having a small dimension, which is performed by the orientation adjustment conveyor of Fig. 1;
Fig. 5 is a view illustrating an orientation adjustment apparatus according to a second embodiment; and
Fig. 6 is a top view of the orientation adjustment conveyor of Fig. 5.

Description of Embodiments

[First Embodiment]

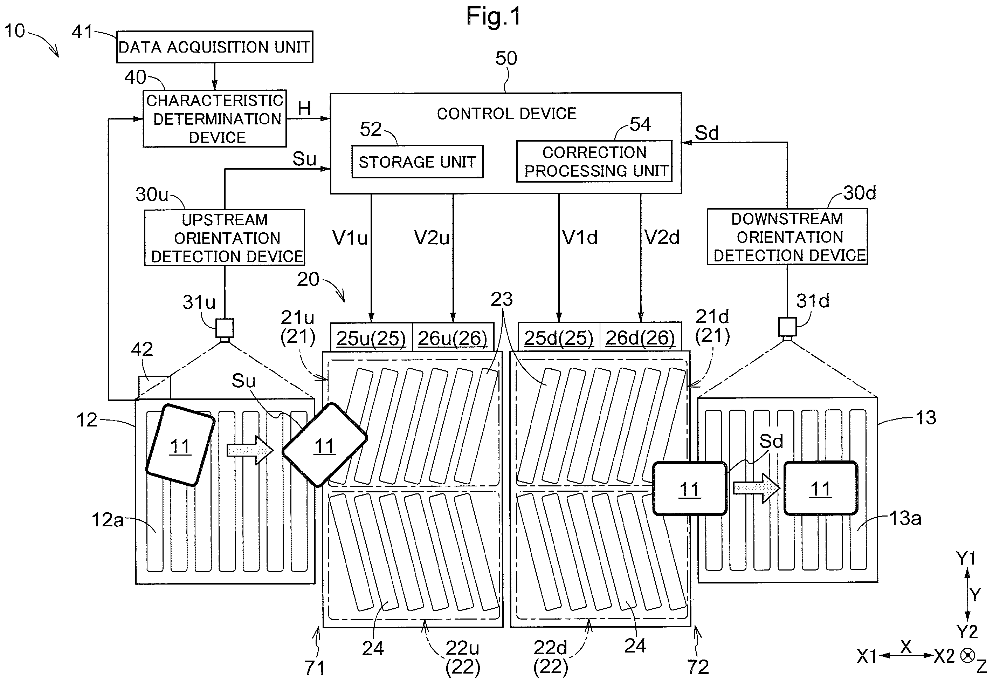

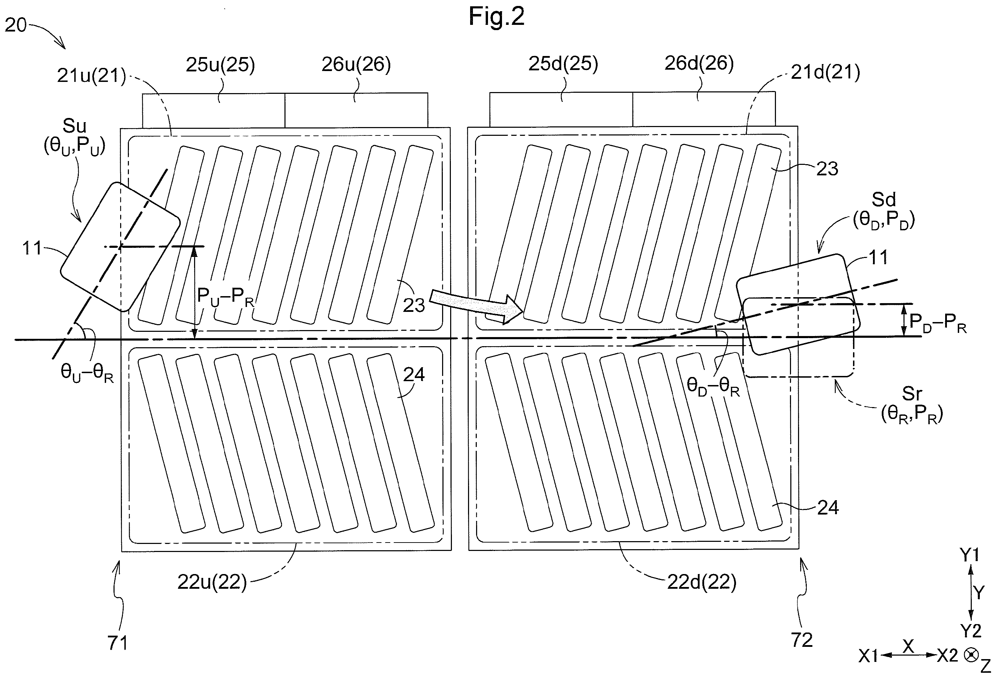

Hereinafter, an orientation adjustment apparatus 10 according to a first embodiment will be described with reference to the drawings. Fig. 1 is a block diagram illustrating a control configuration of the orientation adjustment apparatus 10 of the present embodiment. The orientation adjustment apparatus 10 includes an orientation adjustment conveyor 20 that adjusts an orientation S of a conveyance target 11 while conveying the conveyance target 11 along a prescribed conveyance direction X. Fig. 2 is a top view of the orientation adjustment conveyor 20. The conveyance target 11 is not particularly limited and examples thereof include a plurality of packages that are different from each other in outer shape, size, weight, and the like. The conveyance target 11 is preferably luggage inspected at an airport. Here, a direction orthogonal to the conveyance direction X will be referred to as a conveyance width direction Y. In addition, a direction along a perpendicular direction will be referred to as a vertical direction Z. In addition, an upstream side X1 refers to an upstream side in the conveyance direction X, and a downstream side X2 refers to a downstream side in the conveyance direction X.

The orientation S of the conveyance target 11 is at least an angle $\theta$ (°) of the conveyance target 11 as seen in a plan view. In the present embodiment, the orientation S of the conveyance target 11 is the angle $\theta$ of the conveyance target 11 as seen in the plan view and a position P (mm) of the conveyance target 11 in the conveyance width direction Y. The angle $\theta$ of the conveyance target 11 as seen in the plan view is, for example, an angle as seen in the vertical direction and is the angle of the conveyance target 11 related to a case where a target angle $\theta_R$ of the conveyance target 11 in a target orientation Sr is 0 (°). The position P of the conveyance target 11 in the conveyance width direction Y is, for example, the position of the conveyance target 11 related to a case where a target position $P_R$ of the conveyance target 11 in the target orientation Sr is 0 (mm). The target orientation Sr of the conveyance target 11 may be determined for each type of the conveyance target 11. In an example of Fig. 2, the angle $\theta$ in a state where a long side of the conveyance target 11 is parallel to the conveyance direction X is the target angle $\theta_R$, that is, 0 (°) and a position at which the position P of the center of the conveyance target 11 as seen in the vertical direction overlaps with the center of the orientation adjustment conveyor 20 in the conveyance width direction Y is the target position $P_R$, that is, 0 (mm). Examples of the center of the conveyance target 11 include the center of gravity of the conveyance target 11 and a midpoint (in other words, a point at which diagonal lines intersect each other) of a long side and a short side of the conveyance target 11.

The orientation adjustment conveyor 20 includes a first conveyor part 21 and a second conveyor part 22 that are disposed in parallel to be adjacent to each other in the conveyance width direction Y. Here, a side in the conveyance width direction Y on which the first conveyor part 21 is disposed with respect to the second conveyor part 22 will be referred to as a first conveyance width direction side Y1 and a side opposite to the first conveyance width direction side Y1 will be referred to as a second conveyance width direction side Y2. In the present embodiment, the first conveyor part 21 is a roller conveyor in which a plurality of first rollers 23 are disposed to be arranged in the conveyance direction X and each of the first rollers 23 has a rotation axis inclined to become closer to the downstream side X2 in the conveyance direction X toward the first conveyance width direction side Y1. In addition, in the present embodiment, the second conveyor part 22 is a roller conveyor in which a plurality of second rollers 24 are disposed to be arranged in the conveyance direction X and each of the second rollers 24 has a rotation axis inclined to become closer to the downstream side X2 in the conveyance direction X toward the second conveyance width direction side Y2.

The orientation adjustment conveyor 20 is configured such that a conveyance speed V1 (m/s) of the first conveyor part 21 and a conveyance speed V2 (m/s) of the second conveyor part 22 are able to be made different from each other.

In the present embodiment, the first conveyor part 21 is configured such that a conveyance speed V1u (m/s) at a first upstream-side section 21u, which is a section on the upstream side X1, and a conveyance speed V1d (m/s) at a first downstream-side section 21d, which is a section on the downstream side X2 with respect to the first upstream-side section 21u, are able to be made different from each other. In addition, the second conveyor part 22 is configured such that a conveyance speed V2u (m/s) at a second upstream-side section 22u, which is a section on the upstream side X1, and a conveyance speed V2d (m/s) at a second downstream-side section 22d, which is a section on the downstream side X2 with respect to the second upstream-side section 22u, are able to be made different from each other. In the example in the drawing, the first upstream-side section 21u and the first downstream-side section 21d are disposed to be adjacent to each other and the second upstream-side section 22u and the second downstream-side section 22d are disposed to be adjacent to each other.

In addition, in the present embodiment, the orientation adjustment conveyor 20 includes a first driving device 25 that drives the first conveyor part 21 and a second driving device 26 that drives the second conveyor part 22. Therefore, the conveyance speed V1 (m/s) and the conveyance speed V2 (m/s) are able to be made different from each other. The first driving device 25 includes a first upstream driving device 25u and a first downstream driving device 25d and since the first upstream driving device 25u drives the first rollers 23 of the first upstream-side section 21u and the first downstream driving device 25d drives the first rollers 23 of the first downstream-side section 21d, the conveyance speed V1u and the conveyance speed V1d are able to be made different from each other. The second driving device 26 includes a second upstream driving device 26u and a second downstream driving device 26d and since the second upstream driving device 26u drives the second rollers 24 of the second upstream-side section 22u and the second downstream driving device 26d drives the second rollers 24 of the second downstream-side section 22d, the conveyance speed V2u and the conveyance speed V2d are able to be made different from each other.

In the present embodiment, the orientation adjustment apparatus 10 includes an upstream-side base unit 12 provided on the upstream side X1 with respect to the orientation adjustment conveyor 20. In the example in the drawing, the upstream-side base unit 12 is a roller conveyor in which a plurality of upstream rollers 12a are disposed to be arranged in the conveyance direction X and a rotation axis of each of the upstream rollers 12a is a direction along the conveyance width direction Y. Therefore, the orientation S of the conveyance target 11 is not changed on the upstream-side base unit 12.

The orientation adjustment apparatus 10 includes an upstream-side orientation detection device 30u that detects the orientation S of the conveyance target 11 at an upstream-side end portion 71 of the orientation adjustment conveyor 20. Here, the actual orientation S of the conveyance target 11 detected by the upstream-side orientation detection device 30u will be referred to as an upstream-side actual orientation Su. A position at which the upstream-side actual orientation Su is detected may be the upstream-side end portion 71 of the orientation adjustment conveyor 20. In addition, in a case where the orientation S of the conveyance target 11 is not changed on the upstream side X1 with respect to the orientation adjustment conveyor 20, a position at which the upstream-side actual orientation Su is detected may be closer to the upstream side X1 than the upstream-side end portion 71 is. In the example in the drawing, the upstream-side orientation detection device 30u detects the orientation S of the conveyance target 11 at the upstream-side base unit 12. Since the orientation S of the conveyance target 11 is not changed on the upstream-side base unit 12 as described above, the orientation S of the conveyance target 11 detected by the upstream-side orientation detection device 30u at the upstream-side base unit 12 is the same as the upstream-side actual orientation Su, which is the orientation S at the upstream-side end portion 71 of the orientation adjustment conveyor 20. The upstream-side orientation detection device 30u includes a camera 31u provided at, for example, the upstream-side base unit 12 to detect an upstream-side actual angle $\theta_U$ which is the actual angle of the conveyance target 11 at the upstream-side end portion 71 and an upstream-side actual position $P_U$ which is the actual position of the conveyance target 11, that is, the upstream-side actual orientation Su.

In the present embodiment, the orientation adjustment apparatus 10 includes a downstream-side base unit 13 provided on the downstream side X2 with respect to the orientation adjustment conveyor 20. In the example in the drawing, the downstream-side base unit 13 is a roller conveyor in which a plurality of downstream rollers 13a are disposed to be arranged in the conveyance direction X and a rotation axis of each of the downstream rollers 13a is a direction along the conveyance width direction Y. Therefore, the orientation S of the conveyance target 11 is not changed on the downstream-side base unit 13.

In the present embodiment, the orientation adjustment apparatus 10 further includes a downstream-side orientation detection device 30d that detects the orientation S of the conveyance target 11 at a downstream-side end portion 72 of the orientation adjustment conveyor 20. Here, the actual orientation S of the conveyance target 11 detected by the downstream-side orientation detection device 30d will be referred to as a downstream-side actual orientation Sd. A position at which the downstream-side actual orientation Sd is detected may be the downstream-side end portion 72 of the orientation adjustment conveyor 20. In addition, in a case where the orientation S of the conveyance target 11 is not changed on the downstream side X2 with respect to the orientation adjustment conveyor 20, a position at which the downstream-side actual orientation Sd is detected may be closer to the downstream side X2 than the downstream-side end portion 72 is. In the example in the drawing, the downstream-side orientation detection device 30d detects the orientation S of the conveyance target 11 at the downstream-side base unit 13. Since the orientation S of the conveyance target 11 is not changed on the downstream-side base unit 13 as described above, the orientation S of the conveyance target 11 detected by the downstream-side orientation detection device 30d at the downstream-side base unit 13 is the same as the downstream-side actual orientation Sd, which is the orientation S at the downstream-side end portion 72 of the orientation adjustment conveyor 20. The downstream-side orientation detection device 30d includes a camera 31d provided at, for example, the downstream-side base unit 13 to detect a downstream-side actual angle $\theta_D$ which is the actual angle of the conveyance target 11 at the downstream-side end portion 72 and a downstream-side actual position $P_D$ which is the actual position of the conveyance target 11, that is, the downstream-side actual orientation Sd. Note that the downstream-side orientation detection device 30d and the upstream-side orientation detection device 30u may be the same device as each other.

As shown in Fig. 1, the orientation adjustment apparatus 10 includes a characteristic determination device 40 that determines the characteristics of the conveyance target 11 on the upstream side X1 with respect to the orientation adjustment conveyor 20. The characteristics of the conveyance target 11 may be acquired by a characteristic acquisition unit provided in the orientation adjustment apparatus 10 and the characteristics may be acquired as conveyance target information including the characteristics is transmitted from an external device and is received by a data acquisition unit 41 provided in the orientation adjustment apparatus 10. In the present embodiment, the characteristic determination device 40 determines characteristics acquired by a characteristic acquisition unit provided at the upstream-side base unit 12. In the example in the drawing, the upstream-side orientation detection device 30u also functions as the characteristic acquisition unit that acquires the characteristics of the conveyance target 11 such as the shape thereof. In addition, a weight measurement unit 42 that is provided at the upstream-side base unit 12 and that acquires characteristics such as a weight or the center of gravity also functions as the characteristic acquisition unit.

In the present embodiment, the characteristic determination device 40 sets a characteristic value H indicating the degree of difficulty of changing an orientation in accordance with the characteristics of the conveyance target 11. The characteristics of the conveyance target 11 are, for example, the size, the shape, the weight, the material, and the like of the conveyance target 11. Examples of the size of the conveyance target 11 include a dimension of a long side L1 of the conveyance target 11, the area as seen in a plan view, and the area of a bottom surface of the conveyance target 11. Examples of the shape of the conveyance target 11 include a ratio between the long side L1, a short side L2 as seen in the vertical direction and the shape of the bottom surface, and the like. Examples of the material of the conveyance target 11 include the material, the hardness, the surface roughness of the bottom surface of the conveyance target 11, and the like. The dimensions, shapes, and the like of each portion of the conveyance target 11 may be acquired by, for example, the camera 31u provided at the upstream-side base unit 12 and may be acquired by a scanning device such as a millimeter-wave CT scanner.

The larger the characteristic value H is, the higher the degree of difficulty of changing the orientation of the conveyance target 11 is. Although the characteristic value H is preferably set in accordance with a plurality of characteristics, the characteristic value H may be set in accordance with a single characteristic. For example, the characteristic value H is set to become larger continuously or stepwise as the weight of the conveyance target 11 increases. In addition, the characteristic value H is set to become larger continuously or stepwise as the area of the conveyance target 11 as seen in the plan view decreases. In addition, the characteristic value H is set to become larger continuously or stepwise as a value obtained by dividing the long side L1 of the conveyance target 11 by the short side L2 increases. In addition, the characteristic value H is set to become larger continuously or stepwise as the friction coefficient of the bottom surface of the conveyance target 11 decreases.

The orientation S in which the conveyance target 11 is to face at the downstream-side end portion 72 of the orientation adjustment conveyor 20 will be referred to as the target orientation Sr. The orientation adjustment apparatus 10 includes a control device 50 that controls the orientation adjustment conveyor 20. The control device 50 controls a speed difference ΔV between the conveyance speed V1 of the first conveyor part 21 and the conveyance speed V2 of the second conveyor part 22 to perform orientation adjustment control in which the orientation S of the conveyance target 11 that is conveyed in a state of being placed on both of the first conveyor part 21 and the second conveyor part 22 is changed.

In the orientation adjustment control, the control device 50 changes the speed difference ΔV in accordance with the degree of a pre-adjustment orientation difference ΔSu, which is a difference between the upstream-side actual orientation Su and the target orientation Sr, and increases the speed difference ΔV as the characteristic value H, which is set in accordance with the characteristics of the conveyance target 11 determined by the characteristic determination device 40 and which indicates the degree of difficulty of changing the orientation, increases, based on the pre-adjustment orientation difference ΔSu and the characteristic value H. In the present embodiment, in the orientation adjustment control, the control device 50 increases the speed difference ΔV as the pre-adjustment orientation difference ΔSu increases and increases the speed difference ΔV as the characteristic value H increases based on the pre-adjustment orientation difference ΔSu and the characteristic value H.

The conveyance target 11 is preferably conveyed by the orientation adjustment conveyor 20 one by one with the control device 50 controlling the speed difference ΔV. In this case, the speed difference ΔV may be changed while the conveyance target 11 is passing through the orientation adjustment conveyor 20 thereon. However, in the present embodiment, the speed difference ΔV is not changed from an initial speed difference ΔVa which is determined based on the pre-adjustment orientation difference ΔSu, which is a difference between the upstream-side actual orientation Su and the target orientation Sr, and the characteristic value H.

In the present embodiment, for example, an adjustment rate of the conveyance speed V1 of the first conveyor part 21 with respect to a conveyance speed V (m/s) of the orientation adjustment conveyor 20 will be referred to as an adjustment rate u1 (= 100 · V1/V) and an adjustment rate of the conveyance speed V2 of the second conveyor part 22 with respect to the conveyance speed V of the orientation adjustment conveyor 20 will be referred to as an adjustment rate u2 (= 100 · V2/V). That is, since V1 = V · u1/100 and V2 = V ·u2/100, the conveyance speed V1 is able to be determined based on the conveyance speed V (m/s) of the orientation adjustment conveyor 20 and the adjustment rate u1 (%), and the conveyance speed V2 is able to be determined based on the conveyance speed V (m/s) and the adjustment rate u2 (%).

The adjustment rate u1 (%) is able to be represented by Equation (1a) as follows, and the adjustment rate u2 (%) is able to be represented by Equation (2a) as follows.

$$u1 = 100 + (K_\theta + K_H \cdot H) \cdot (\theta_U - \theta_R) + K_P (P_U - P_R) \quad (1a)$$

$$u2 = 100 - (K_\theta + K_H \cdot H) \cdot (\theta_U - \theta_R) - K_P (P_U - P_R) \quad (2a)$$

Here, $K_\theta$ is a weighting coefficient with respect to the angle θ, $K_P$ is a weighting coefficient with respect to the position P, $K_H$ is a weighting coefficient with respect to the characteristic value H, $\theta_R$ is a target angle at the time of the target orientation Sr, and $P_R$ is a target position at the time of the target orientation Sr. The target angle $\theta_R$ and the target position $P_R$ correspond to the target orientation Sr, and the upstream-side actual angle $\theta_U$ and the upstream-side actual position $P_U$ correspond to the upstream-side actual orientation Su.

In a case where the characteristic value H is set in accordance with a plurality of characteristics, it is desirable that a weighting coefficient is set for each of the plurality of characteristics as represented by Equation (3a) as follows.

$$K_H \cdot H = K_{HA} \cdot H_A + K_{HB} \cdot H_B + K_{HC} \cdot H_C + K_{HD} \cdot H_D \quad (3a)$$

In Equation (3a), for example, a characteristic value $H_A$ is a weight, a characteristic value $H_B$ is the reciprocal of the area as seen in the plan view, a characteristic value $H_C$ is a value obtained by dividing the long side L1 of the conveyance target 11 by the short side L2, and a characteristic value $H_D$ is the reciprocal of the friction coefficient of the bottom surface of the conveyance target 11.

In the present embodiment, the control device 50 includes a storage unit 52 and a correction processing unit 54. The storage unit 52 stores learning information indicating a relationship between the pre-adjustment orientation difference ΔSu, the characteristic value H, a control coefficient K for determining the speed difference ΔV based on the pre-adjustment orientation difference ΔSu and the characteristic value H, and a post-adjustment orientation difference ΔSd which is a difference between the downstream-side actual orientation Sd resulting from the orientation adjustment control and the target orientation Sr. The correction processing unit 54 corrects the control coefficient K based on the learning information stored in the storage unit 52.

In the present embodiment, for example, in a case where an adjustment rate at the first conveyor part 21 for the i-th conveyance target 11 is u1$_i$, the adjustment rate u1$_i$ is able to be represented by Equation (1b) as follows. In addition, in a case where an adjustment rate at the second conveyor part 22 for the i-th conveyance target 11 is $u2_i$, the adjustment rate $u2_i$ is able to be represented by Equation (2b) as follows.

$$u1_i = 100 + (K_{\theta i} + K_{Hi} \cdot H) \cdot (\theta_U - \theta_R) + K_{Pi} (P_U - P_R) \quad (1b)$$

$$u2_i = 100 - (K_{\theta i} + K_{Hi} \cdot H) \cdot (\theta_U - \theta_R) - K_{Pi} (P_U - P_R) \quad (2b)$$

Here, $K_{\theta i}$ is a weighting coefficient with respect to the angle $\theta$, $K_{Pi}$ is a weighting coefficient with respect to the position P, and $K_{Hi}$ is a weighting coefficient with respect to the characteristic value H.

The angle and the position of the conveyance target 11 at the downstream-side end portion 72 resulting from orientation adjustment control that is performed by the control device 50 based on the adjustment rate $u1_i$ and the adjustment rate $u2_i$ will be referred to as the downstream-side actual angle $\theta_D$ and the downstream-side actual position $P_D$, respectively. The angle $\theta_R$ and the position $P_R$ correspond to the target orientation Sr, the downstream-side actual angle $\theta_D$ and the downstream-side actual position $P_D$ correspond to the downstream-side actual orientation Sd, and an angle $\theta_D - \theta_R$ and a position $P_D - P_R$ correspond to the post-adjustment orientation difference $\Delta$Sd.

In the present embodiment, the storage unit 52 stores learning information indicating a relationship between the pre-adjustment orientation difference $\Delta$Su (an angle $\theta_U - \theta_R$ and a position $P_U - P_R$), the characteristic value H, the control coefficient K (the weighting coefficients $K_{\theta i}$, $K_{Pi}$, and $K_{Hi}$) for determining the speed difference $\Delta$V based on the pre-adjustment orientation difference $\Delta$Su and the characteristic value H, and the post-adjustment orientation difference $\Delta$Sd (the angle $\theta_D - \theta_R$ and the position $P_D - P_R$).

Furthermore, a weighting coefficient with respect to the angle $\theta$ regarding the (i + 1)-th conveyance target 11 will be referred to as $K_{\theta i + 1}$, a weighting coefficient with respect to the position P will be referred to as a weighting coefficient $K_{Pi + 1}$, and a weighting coefficient with respect to the characteristic value H will be referred to as a weighting coefficient $K_{Hi+1}$.

The correction processing unit 54 corrects the control coefficient K (the weighting coefficients $K_{\theta i + 1}$, $K_{Pi + 1}$, and $K_{Hi + 1}$) based on the learning information stored in the storage unit 52. It is preferable that the control coefficient K is changed in a case where the post-adjustment orientation difference $\Delta$Sd is equal to or greater than a threshold value J and the control coefficient K is not changed in a case where the post-adjustment orientation difference $\Delta$Sd is smaller than the threshold value J. For example, in a case where the absolute value of the angle $\theta_D - \theta_R$ is smaller than a threshold value $\theta_J$, the weighting coefficient $K_{Hi + 1}$ is represented by Equation (4b), and in a case where the absolute value of the angle $\theta_D - \theta_R$ is equal to or greater than the threshold value $\theta_J$, the weighting coefficient $K_{Hi + 1}$ is represented by Equation (5b).

$$K_{Hi} + 1 = K_{Hi} \quad (4b)$$

$$K_{Hi} + 1 = K_{Hi} + \alpha \quad (5b)$$

Here, $\alpha$ is a predetermined correction value. The correction value $\alpha$ is, for example, a positive value in a case where the angle $\theta_D - \theta_R$ is positive, and is a negative value in a case where the angle $\theta_D - \theta_R$ is negative. The threshold value J, the threshold value $\theta_J$, and the correction value $\alpha$ may be determined through an experiment, machine learning, or the like.

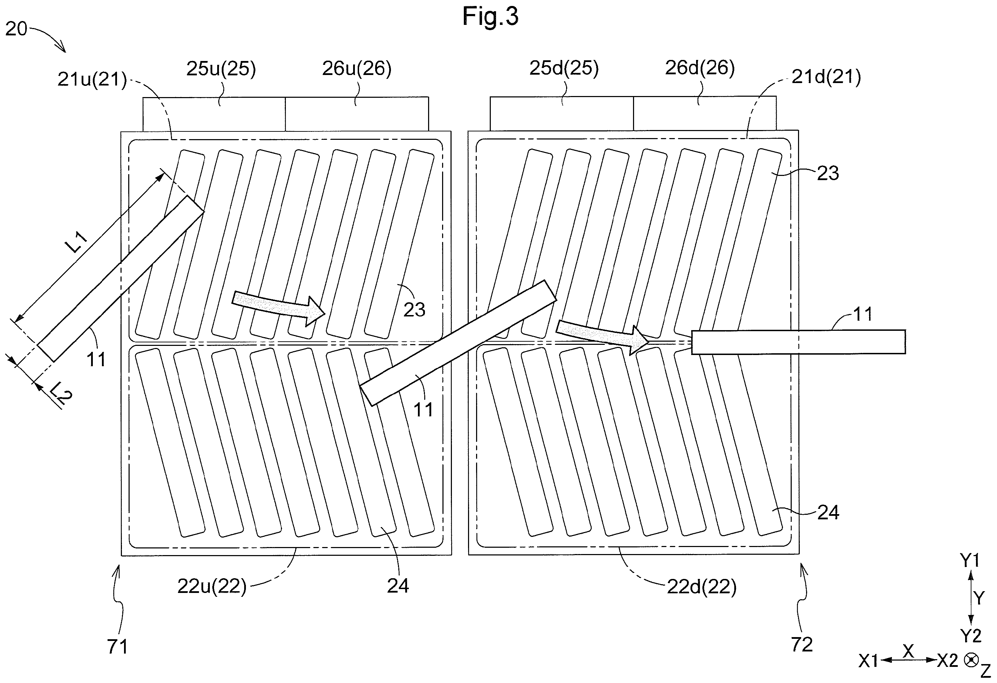

Fig. 3 is a view illustrating conveyance of the conveyance target 11 of which a dimension of the long side L1 is equal to or greater than a set value. In the present embodiment, the control device 50 controls the orientation adjustment conveyor 20 in the orientation adjustment control such that the conveyance speed V1u at the first upstream-side section 21u and the conveyance speed V2u at the second upstream-side section 22u are made different from each other and the conveyance speed V1d at the first downstream-side section 21d and the conveyance speed V2d at the second downstream-side section 22d are made different from each other in a case where a dimension of the long side L1 of the conveyance target 11 is equal to or greater than the set value. In a case where the dimension of the long side L1 of the conveyance target 11 exceeds a certain value, a rear end of the conveyance target 11 may be placed on the orientation adjustment conveyor 20 late and thus it may become difficult to change the orientation of the conveyance target 11. Therefore, since the orientation adjustment control is performed by using both of the upstream-side sections (21u and 22u) and the downstream-side sections (21d and 22d) of the orientation adjustment conveyor 20 in the case of the conveyance target 11 that is large in dimension of the long side L1, it is easy to make the orientation S of the conveyance target 11 similar to the target orientation Sr. The set value may be a predetermined value or a value changed by machine learning.

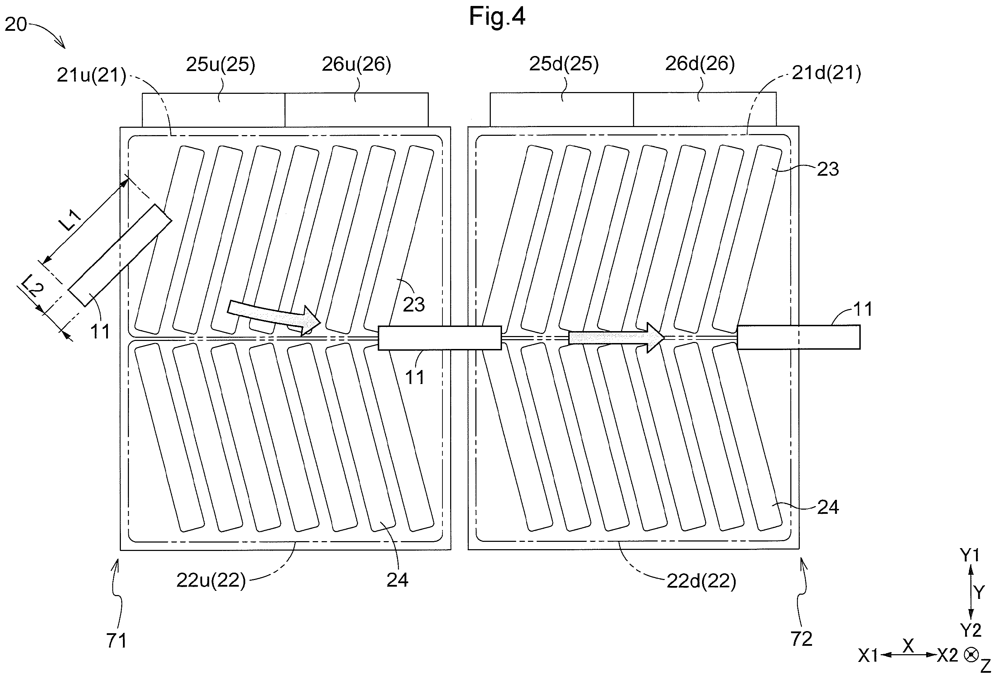

Fig. 4 is a view illustrating conveyance of the conveyance target 11 of which the dimension of the long side L1 is smaller than the set value. In the present embodiment, the control device 50 controls the orientation adjustment conveyor 20 in the orientation adjustment control such that the conveyance speed V1u at the first upstream-side section 21u and the conveyance speed V2u at the second upstream-side section 22u are made different from each other and the conveyance speed V1d at the first downstream-side section 21d and the conveyance speed V2d at the second downstream-side section 22d are made not different from each other in a case where a dimension of the long side L1 of the conveyance target 11 is smaller than the set value. Therefore, since the orientation adjustment control is performed by using only the upstream-side sections (21u and 22u) of the orientation adjustment conveyor 20 in the case of the conveyance target 11 that is small in dimension of the long side L1, it is easy to prevent the orientation S of the conveyance target 11 from being excessively changed to be different from the target orientation Sr.

[Second Embodiment]

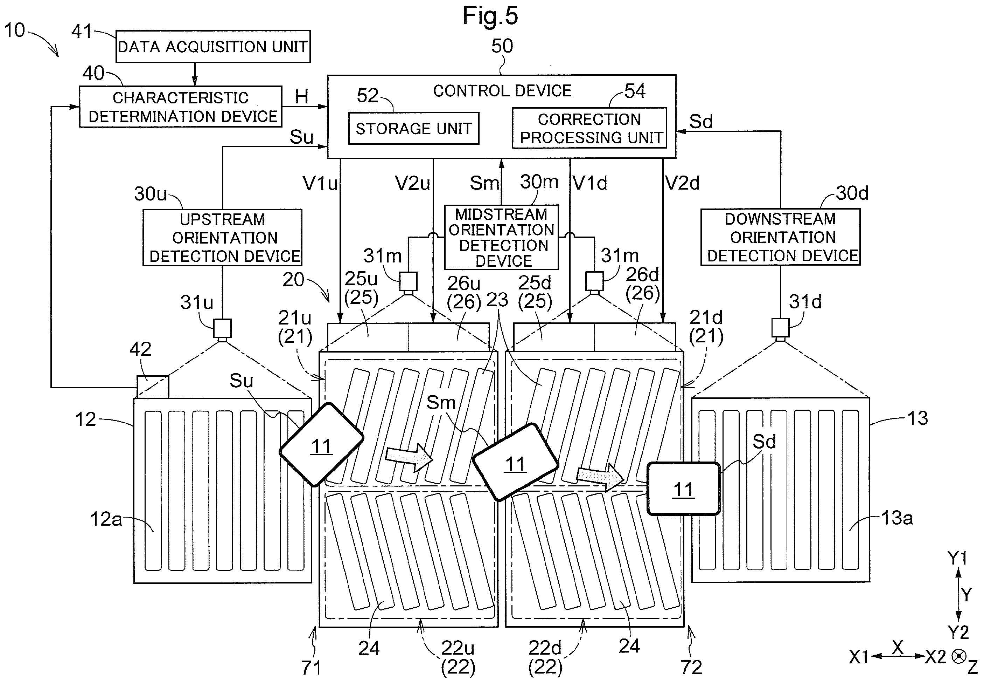

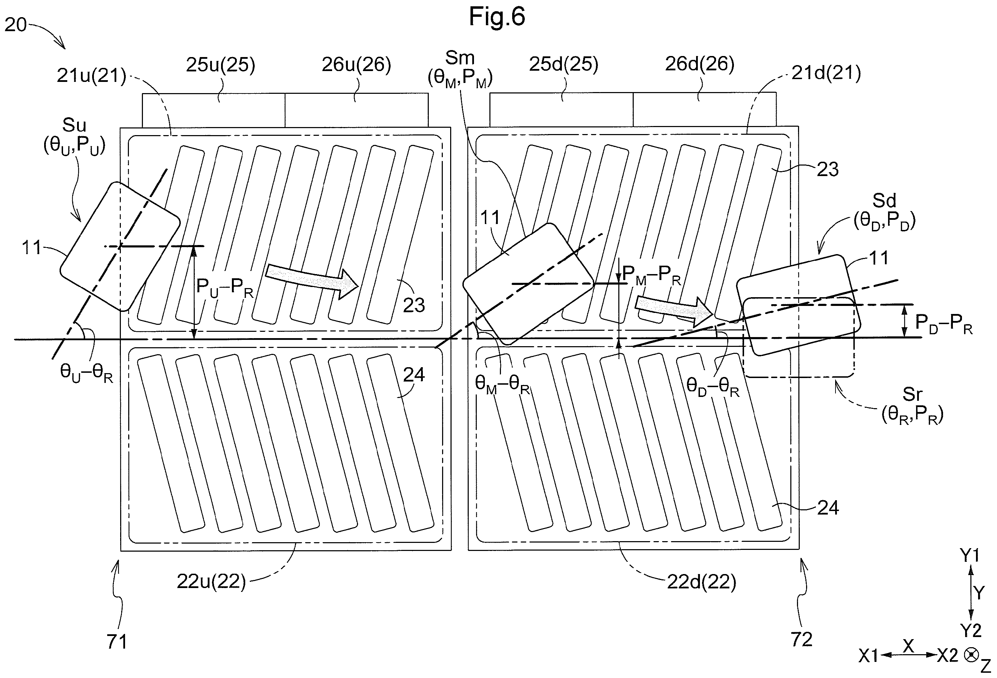

Hereinafter, the orientation adjustment apparatus 10 according to a second embodiment will be described with reference to the drawings. Fig. 5 is a block diagram illustrating a control configuration of the orientation adjustment apparatus 10 of the present embodiment. Fig. 6 is a top view of the orientation adjustment conveyor 20 of the present embodiment. The present embodiment is different from the first embodiment in that the orientation adjustment apparatus 10 includes a during-conveyance orientation detection device 30m. Hereinafter, a difference from the first embodiment will be mainly described. In addition, a point that is not particularly described is the same as that in the first embodiment.

As shown in Figs. 5 and 6, in the present embodiment, the orientation adjustment apparatus 10 further includes the during-conveyance orientation detection device 30m that detects the orientation S of the conveyance target 11 over the entire region of the orientation adjustment conveyor 20. The actual orientation S of the conveyance target 11 detected by the during-conveyance orientation detection device 30m will be referred to as a during-conveyance actual orientation Sm. In an example in the drawing, the orientation adjustment conveyor 20 includes the during-conveyance orientation detection device 30m. The during-conveyance orientation detection device 30m includes a camera 31m provided at, for example, the orientation adjustment conveyor 20 to detect a during-conveyance actual angle $\theta_M$ which is the actual angle of the conveyance target 11 over the entire region of the orientation adjustment conveyor 20 and an during-conveyance actual position $P_M$ which is the actual position of the conveyance target 11, that is, the during-conveyance actual orientation Sm.

In the present embodiment, the control device 50 determines the initial speed difference $\Delta Va$ based on the pre-adjustment orientation difference $\Delta Su$ which is a difference between the upstream-side actual orientation Su and the target orientation Sr and the characteristic value H and then changes, based on a during-conveyance orientation difference $\Delta Sm$ which is a difference between the during-conveyance actual orientation Sm and the target orientation Sr and the characteristic value H, the speed difference $\Delta V$ as needed such that the speed difference $\Delta V$ changes in accordance with the degree of the during-conveyance orientation difference $\Delta Sm$ and the speed difference $\Delta V$ increases as the characteristic value H increases while the conveyance target 11 is being conveyed by the orientation adjustment conveyor 20.

In the present embodiment, an adjustment rate u1m (= 100 · V1/V) of the conveyance speed V1 of the first conveyor part 21 with respect to the conveyance speed V (m/s) of the orientation adjustment conveyor 20 an adjustment rate u2m (= 100 · V2/V) of the conveyance speed V2 of the second conveyor part 22 with respect to the conveyance speed V of the orientation adjustment conveyor 20 are determined as needed during conveyance of the conveyance target 11, so that the speed difference $\Delta V$ is changed as needed. The adjustment rate u1m (%) during conveyance of the conveyance target 11 is able to be represented by Equation (1c) as follows, and the adjustment rate u2m (%) is able to be represented by Equation (2c) as follows.

$$u1m = 100 + (K_\theta + K_H \cdot H) \cdot (\theta_M - \theta_R) + K_P (P_M - P_R) \quad (1c)$$

$$u2m = 100 - (K_\theta + K_H \cdot H) \cdot (\theta_M - \theta_R) - K_P (P_M - P_R) \quad (2c)$$

The during-conveyance actual angle $\theta_M$ and the during-conveyance actual position $P_M$ correspond to the during-conveyance actual orientation Sm and an angle $\theta_M - \theta_R$ and a position $P_M - P_R$ correspond to the during-conveyance orientation difference $\Delta Sm$.

In the present embodiment, first, the control device 50 determines the initial speed difference $\Delta Va$ based on the pre-adjustment orientation difference $\Delta Su$ (the angle $\theta_U - \theta_R$ and the position $P_U - P_R$) and the characteristic value H. Next, while the conveyance target 11 is being conveyed by the orientation adjustment conveyor 20, the control device 50 changes, based on the during-conveyance orientation difference $\Delta Sm$ (the angle $\theta_M - \theta R$ and the position $P_M - P_R$) and the characteristic value H, the speed difference $\Delta V$ as needed such that the speed difference $\Delta V$ increases as the during-conveyance orientation difference $\Delta Sm$ (the angle $\theta_M - \theta_R$ and the position $P_M - P_R$) increases and the speed difference $\Delta V$ increases as the characteristic value H increases. In addition, the control device 50 also changes the speed difference $\Delta V$ as needed such that the speed difference $\Delta V$ decreases as the during-conveyance orientation difference $\Delta Sm$ (the angle

$\theta_M - \theta_R$ and the position $P_M - P_R$) decreases and the speed difference $\Delta V$ decreases as the characteristic value H decreases. In addition, proportional-integral control computation (PI control computation), proportional-integral-derivative control computation (PID control computation), or the like may be used in a case where the control device 50 changes the speed difference $\Delta V$ as needed in accordance with the degree of the during-conveyance orientation difference $\Delta Sm$. In the present embodiment, it is preferable that the control device 50 includes the storage unit 52 and the correction processing unit 54. However, the control device 50 may not include the storage unit 52 and the correction processing unit 54.

(Other Embodiments)

Next, other embodiments of the orientation adjustment apparatus 10 will be described.

(1) In the above-described embodiments, a configuration in which the first conveyor part 21 and the second conveyor part 22 of the orientation adjustment conveyor 20 are roller conveyors has been described as an example. However, the present invention is not limited to such a configuration, and for example, the first conveyor part 21 and the second conveyor part 22 may be belt conveyors, chain conveyors, or other known conveyors.

(2) In the above-described embodiments, a configuration in which the first conveyor part 21 of the orientation adjustment conveyor 20 is driven by the first driving device 25 and the second conveyor part 22 is driven by the second driving device 26 has been described as an example. However, the present invention is not limited to such a configuration, and for example, a configuration may be adopted in which the first upstream-side section 21u and the first downstream-side section 21d of the first conveyor part 21 and the second upstream-side section 22u and the second downstream-side section 22d of the second conveyor part 22 are driven by the same driving device and a transmission that changes the ratio of rotation transmission from the driving device is provided. In addition, conveyance speeds at the first upstream-side section 21u and the first downstream-side section 21d of the first conveyor part 21 may not be able to be made different from each other. In addition, conveyance speeds at the second upstream-side section 22u and the second downstream-side section 22d of the second conveyor part 22 may not be able to be made different from each other.

(3) In the above-described embodiments, an example in which the orientation adjustment apparatus 10 includes the upstream-side orientation detection device 30u, the downstream-side orientation detection device 30d, and the characteristic determination device 40 and the control device 50 includes the storage unit 52 and the correction processing unit 54 has been described. However, the present invention is not limited to such an example, and for example, the orientation adjustment apparatus 10 may not include the downstream-side orientation detection device 30d and the control device 50 may not include the storage unit 52 and the correction processing unit 54. That is, learning may not be performed by the storage unit 52 and the correction processing unit 54 and for example, the orientation S of the conveyance target 11 may be adjusted by means of the speed difference $\Delta V$ determined based on only the target orientation Sr that is predetermined, the upstream-side actual orientation Su that is detected by the upstream-side orientation detection device 30u, and the characteristic value H that is determined by the characteristic determination device 40.

(4) In the above-described Embodiment 1, a configuration in which the orientation adjustment apparatus 10 includes the upstream-side orientation detection device 30u, the characteristic determination device 40, and the downstream-side orientation detection device 30d has been described as an example. However, the present invention is not limited to such a configuration, and for example, the upstream-side orientation detection device 30u or the downstream-side orientation detection device 30d may also serve as the upstream-side orientation detection device 30u, the downstream-side orientation detection device 30d, and the characteristic determination device 40. In addition, in the above-described Embodiment 2, a configuration in which the orientation adjustment apparatus 10 includes the upstream-side orientation detection device 30u, the characteristic determination device 40, the during-conveyance orientation detection device 30m, and the downstream-side orientation detection device 30d has been described as an example. However, the present invention is not limited to such a configuration, and for example, the during-conveyance orientation detection device 30m may also serve as the upstream-side orientation detection device 30u, the during-conveyance orientation detection device 30m, the downstream-side orientation detection device 30d, and the characteristic determination device 40.

(5) In the above-described embodiments, a configuration in which each of the first rollers 23 has a rotation axis inclined to become closer to the downstream side X2 in the conveyance direction X toward the first conveyance width direction side Y1 and each of the second rollers 24 has a rotation axis inclined to become closer to the downstream side X2 in the conveyance direction X toward the second conveyance width direction side Y2 has been described as an example. However, the present invention is not limited to such a configuration, and for example, the rotation axis of each of the first rollers 23 and the second rollers 24 may be a rotation axis parallel to the conveyance width direction Y. In addition, in the above-described embodiment, a configuration in which the rotation axis of each of the first rollers 23 and the second rollers 24 is disposed along a horizontal plane has been described as an example. However, the present invention is not limited to such a configuration, and for example, the rotation axis of each of the first rollers 23 and the second rollers 24 may be disposed to be inclined with respect to the horizontal plane. In such a case, for example, each of the first rollers 23 may have a rotation axis inclined to become closer to a lower side in the vertical direction Z toward the second conveyance width direction side Y2 and each of the second rollers 24 may have a rotation axis inclined to become closer to the lower side in the vertical direction Z toward the first conveyance width direction side Y1 so that a central portion of a conveyance surface of the orientation adjustment conveyor 20 in the conveyance width direction Y is positioned lower than both end portions in the conveyance width direction Y.

(6) In addition, the configuration disclosed in the embodiments described above is able to be applied in combination with configurations disclosed in other embodiments as long as there is no contradiction. The embodiments disclosed in the present specification are merely exemplary in all respects with regard to other configurations. Therefore, various modifications are able to be made as appropriate without departing from the scope of the present disclosure.

[Summary of Embodiments]

Hereinafter, the orientation adjustment apparatus described above will be described.

An orientation adjustment apparatus according to the present disclosure is an orientation adjustment apparatus that adjusts an orientation of a conveyance target, the orientation adjustment apparatus including: an orientation adjustment conveyor configured to adjust the orientation of the conveyance target while conveying the conveyance target along a prescribed conveyance direction; a characteristic determination device configured to determine at least one characteristic of the conveyance target on an upstream side with respect to the orientation adjustment conveyor; an upstream orientation detection device configured to detect the orientation of the conveyance target at an upstream end portion of the orientation adjustment conveyor; and a control device configured to control the orientation adjustment conveyor, in which the orientation adjustment conveyor includes a first conveyor part and a second conveyor part that are disposed in parallel to be adjacent to each other in a conveyance width direction and is configured to cause the first conveyor part and the second conveyor part to have respective conveyance speeds different from each other, the conveyance width direction being a direction orthogonal to the conveyance direction, the control device is configured to perform orientation adjustment control for controlling a speed difference between the respective conveyance speeds of the first conveyor part and the second conveyor part to change the orientation of the conveyance target that is conveyed in a state of being placed on both of the first conveyor and the second conveyor, the conveyance target has an intended orientation as an orientation intended at a downstream end portion of the orientation adjustment conveyor and an upstream actual orientation as an actual orientation that the upstream orientation detection device has detected, and the orientation adjustment control includes changing the speed difference in accordance with a degree of a pre-adjustment orientation difference as a difference between the upstream actual orientation and the intended orientation, and increasing the speed difference with an increase in a characteristic value indicative of a degree of difficulty of an orientation change which difficulty corresponds to the at least one characteristic of the conveyance target determined by the characteristic determination device.

According to the present configuration, it is possible to perform appropriate orientation adjustment control in accordance with the characteristics of the conveyance target since speed differences at the first conveyor part and the second conveyor part are made different from each other for the orientation adjustment control based not only on the pre-adjustment orientation difference which is a difference between the upstream actual orientation and the intended orientation but also on the characteristic value which is set in accordance with the characteristics of the conveyance target and which indicates the degree of difficulty of changing the orientation. Therefore, it is possible to appropriately perform orientation adjustment in accordance with the characteristics of each of a plurality of conveyance targets that are different in characteristics in a case where orientation adjustment of such conveyance targets needs to be performed.

According to an aspect, it is preferable that the orientation adjustment apparatus further includes a downstream orientation detection device configured to detect the orientation of the conveyance target at the downstream end portion of the orientation adjustment conveyor and the control device includes a storage unit configured to store learning information indicating a relationship between the pre-adjustment orientation difference, the characteristic value, a control coefficient for determining the speed difference based on the pre-adjustment orientation difference and the characteristic value, and a post-adjustment orientation difference as a difference between a downstream actual orientation resulting from the orientation adjustment control and the intended orientation, the downstream actual orientation being an actual orientation of the conveyance target detected by the downstream orientation detection device, and a correction processing unit configured to correct the control coefficient based on the learning information stored in the storage unit.

According to the present configuration, it is possible to learn the post-adjustment orientation difference resulting from determination of the speed difference based on the pre-adjustment orientation difference, the characteristic value, and the control coefficient and to correct the control coefficient such that the post-adjustment orientation difference is reduced. Accordingly, the control coefficient is able to be gradually made similar to an appropriate value such that the post-adjustment orientation difference is made similar to the intended orientation.

According to an aspect, it is preferable that the orientation adjustment apparatus further includes a during-conveyance orientation detection device configured to detect the orientation of the conveyance target over an entire region of the orientation adjustment conveyor, the speed difference has an initial speed difference based on the pre-adjustment orientation difference and the characteristic value, the conveyance target has a during-conveyance actual orientation as an actual orientation that the during-conveyance orientation detection device has detected, and the control device is configured to determine the initial speed difference and then, while the orientation adjustment conveyor is conveying the conveyance target, change the speed difference in accordance with a degree of a during-conveyance orientation difference as a difference between the during-conveyance actual orientation and the intended orientation and change the speed difference as needed to increase the speed difference with an increase in the characteristic value.

According to the present configuration, it is possible to control, based on the during-conveyance orientation difference during conveyance of the conveyance target performed by the orientation adjustment conveyor and the characteristic value, the speed difference between the first conveyor part and the second conveyor part as needed such that the during-conveyance actual orientation is made similar to the intended orientation. Therefore, it is easy to make the orientation of the conveyance target similar to the intended orientation by means of the orientation adjustment conveyor.

According to an aspect, it is preferable that the first conveyor part is configured to vary the conveyance speed thereof between a first upstream section as an upstream section and a first downstream section as a section downstream of the first upstream section, the second conveyor part is configured to vary the conveyance speed thereof between a second upstream section as an upstream section and a second downstream section as a section downstream of the second upstream section, the at least one characteristic of the conveyance target determined by the characteristic determination device includes a longitudinal dimension of the conveyance target, and the orientation adjustment control includes controlling the orientation adjustment conveyor to generate a speed difference between the conveyance speed at the first upstream section and the conveyance speed at the second upstream section and to eliminate a speed difference between the conveyance speed at the first downstream section and the conveyance speed at the second downstream section in response to the longitudinal dimension of the conveyance target being smaller than a set value and controlling the orientation adjustment conveyor to generate a speed difference between the conveyance speed at the first upstream section and the conveyance speed at the second upstream section and to also generate a speed difference between the conveyance speed at the first downstream section and the conveyance speed at the second downstream section in response to where the longitudinal dimension of the conveyance target being equal to or greater than the set value.

In a case where the dimension of the long side of the conveyance target is large, the orientation of the conveyance target is difficult to change compared to a case where the dimension of the long side is small. According to the present configuration, it is easy to make the orientation of the conveyance target similar to the intended orientation since the orientation adjustment control is performed by using the upstream section and the downstream section of the orientation adjustment conveyor in the case of the conveyance target that is large in dimension of the long side. Meanwhile, since the orientation adjustment control is performed by using only the upstream section of the orientation adjustment conveyor in the case of the conveyance target that is small in dimension of the long side, it is easy to prevent the orientation of the conveyance target from being excessively changed to be different from the intended orientation.

According to an aspect, it is preferable that the characteristic value increases continuously or stepwise with a larger weight of the conveyance target.

The larger the weight of the conveyance target is, the larger the inertia is and the more difficult it is to change the orientation. According to the present configuration, the characteristic value is set to a larger value as the weight of the conveyance target increases. Therefore, it is easy to make the orientation of the conveyance target similar to the intended orientation since appropriate orientation adjustment control is performed in accordance with the weight of the conveyance target.

According to an aspect, it is preferable that the characteristic value increases continuously or stepwise with a smaller area of the conveyance target in a plan view.

The smaller the area of the conveyance target as seen in a plan view is, the more likely the area of contact between the conveyance target, the first conveyor part, and the second conveyor part is to be small and the more difficult it is to change the orientation. According to the present configuration, the characteristic value is set to a larger value as the area as seen in the plan view decreases. Therefore, it is easy to make the orientation of the conveyance target similar to the intended orientation since appropriate orientation adjustment control is performed in accordance with the size of the conveyance target.

According to an aspect, it is preferable that the first conveyor part is disposed on a first conveyance width direction side relative to the second conveyor part in the conveyance width direction, the first conveyance width direction side being opposite to a second conveyance width direction side, the first conveyor part is a roller conveyor including a plurality of first rollers arranged in the conveyance direction, each of the first rollers has a rotation axis inclined downstream in the conveyance direction on the first conveyance width direction side, the second conveyor part is a roller conveyor including a plurality of second rollers arranged in the conveyance direction, and each of the second rollers has a rotation axis inclined downstream in the conveyance direction on the second conveyance width direction side.

According to the present configuration, the conveyance target is able to be gradually moved to a vicinity of a boundary between the first conveyor part and the second conveyor part, that is, a central side of the orientation adjustment conveyor in the conveyance width direction while the conveyance target is being conveyed by the orientation adjustment conveyor. Accordingly, the position of the conveyance target in the conveyance width direction is also able to be adjusted while the conveyance target is being conveyed by the orientation adjustment conveyor.

Industrial Applicability

The technology according to the present disclosure is able to be used for a conveyor type conveyance device including an orientation adjustment apparatus.

Description of Reference Numerals

10: orientation adjustment apparatus
11: conveyance target
20: orientation adjustment conveyor
21: first conveyor part
21u: first upstream-side section
21d: first downstream-side section
22: second conveyor part
22u: second upstream-side section
22d: second downstream-side section
23: first roller
24: second roller
30u: upstream-side orientation detection device
30m: during-conveyance orientation detection device
30d: downstream-side orientation detection device
40: characteristic determination device
42: measurement unit
50: control device
52: storage unit
54: correction processing unit
71: upstream-side end portion
72: downstream-side end portion
H: characteristic value
K: control coefficient
L1: long side
L2: short side
S: orientation
Su: upstream-side actual orientation
Sm: during-conveyance actual orientation
Sd: downstream-side actual orientation
Sr: target orientation
$\Delta$Su: pre-adjustment orientation difference
$\Delta$Sm: during-conveyance orientation difference
$\Delta$Sd: post-adjustment orientation difference
V1: conveyance speed of first conveyor part
V2: conveyance speed of second conveyor part
$\Delta$V: speed difference
$\Delta$Va: initial speed difference

**Claims**

1. An orientation adjustment apparatus that adjusts an orientation of a conveyance target, the orientation adjustment apparatus comprising:

an orientation adjustment conveyor configured to adjust the orientation of the conveyance target while conveying the conveyance target along a conveyance direction;

a characteristic determination device configured to determine at least one characteristic of the conveyance target on an upstream side with respect to the orientation adjustment conveyor;

an upstream orientation detection device configured to detect the orientation of the conveyance target at an upstream end portion of the orientation adjustment conveyor; and

a control device configured to control the orientation adjustment conveyor,

wherein the orientation adjustment conveyor includes a first conveyor part and a second conveyor part that are disposed in parallel to be adjacent to each other in a conveyance width direction and is configured to cause the first conveyor part and the second conveyor part to have respective conveyance speeds different from each other, the conveyance width direction being a direction orthogonal to the conveyance direction,

the control device is configured to perform orientation adjustment control for controlling a speed difference between the respective conveyance speeds of the first conveyor part and the second conveyor part to change the orientation of the conveyance target that is conveyed in a state of being placed on both of the first conveyor part and the second conveyor part ,

the conveyance target has an intended orientation as an orientation intended at a downstream end portion of the orientation adjustment conveyor and an upstream actual orientation as an actual orientation that the upstream orientation detection device has detected,

changing the speed difference in accordance with a degree of a pre-adjustment orientation difference as a difference between the upstream actual orientation and the intended orientation and increasing the speed difference with an increase in a characteristic value indicative of a degree of difficulty of an orientation change which difficulty corresponds to the at least one characteristic of the conveyance target determined by the characteristic determination device .

2. The orientation adjustment apparatus according to claim 1, further comprising:

a downstream orientation detection device configured to detect the orientation of the conveyance target at the downstream end portion of the orientation adjustment conveyor,

wherein the control device includes

a storage unit configured to store learning information indicating a relationship between the pre-adjustment orientation difference, the characteristic value, a control coefficient for determining the speed difference based on the pre-adjustment orientation difference and the characteristic value, and a post-adjustment orientation difference as a difference between a downstream actual orientation resulting from the orientation adjustment control and the intended orientation, the downstream actual orientation being an actual orientation of the conveyance target detected by the downstream orientation detection device, and

a correction processing unit configured to correct the control coefficient based on the learning information stored in the storage unit.

3. The orientation adjustment apparatus according to claim 1, further comprising:

a during-conveyance orientation detection device configured to detect the orientation of the conveyance target over an entire region of the orientation adjustment conveyor,

wherein the speed difference has an initial speed difference based on the pre-adjustment orientation difference and the characteristic value,

the conveyance target has a during-conveyance actual orientation as an actual orientation that the during-conveyance orientation detection device has detected, and

the control device is configured to determine the initial speed difference and then, while the orientation adjustment conveyor is conveying the conveyance target, change the speed difference in accordance with a degree of a during-conveyance orientation difference as a difference between the during-conveyance actual orientation and the intended orientation and change the speed difference as needed to increase the speed difference with an increase in the characteristic value.

4. The orientation adjustment apparatus according to any one of claims 1 to 3,

wherein the first conveyor part is configured to vary the conveyance speed thereof between a first upstream section as an upstream section and a first downstream section as a section downstream of the first upstream section,

the second conveyor part is configured to vary the conveyance speed thereof between a second upstream section as an upstream section and a second downstream section as a section downstream of the second upstream section,

the at least one characteristic of the conveyance target determined by the characteristic determination device includes a longitudinal dimension of the conveyance target, and

the orientation adjustment control includes controlling the orientation adjustment conveyor to generate a speed difference between the conveyance speed at the first upstream section and the conveyance speed at the second upstream section and to eliminate a speed difference between the conveyance speed at the first downstream section and the conveyance speed at the second downstream section in response to the longitudinal dimension of the conveyance target being smaller than a set value and controlling the orientation adjustment conveyor to generate a speed difference between the conveyance speed at the first upstream section and the conveyance speed at the second upstream section and to also generate a speed difference between the conveyance speed at the first downstream section and the conveyance speed at the second downstream section in response to the longitudinal dimension of the conveyance target being equal to or greater than the set value.

5. The orientation adjustment apparatus according to any one of claims 1 to 3,
wherein the characteristic value increases continuously or stepwise with a larger weight of the conveyance target.

6. The orientation adjustment apparatus according to any one of claims 1 to 3,
wherein the characteristic value increases continuously or stepwise with a smaller area of the conveyance target in a plan view.

7. The orientation adjustment apparatus according to any one of claims 1 to 3,

the first conveyor part is disposed on a first conveyance width direction side relative to the second conveyor part in the conveyance width direction, the first conveyance width direction side being opposite to a second conveyance width direction side,

wherein the first conveyor part is a roller conveyor including a plurality of first rollers arranged in the conveyance direction,

each of the first rollers has a rotation axis inclined downstream in the conveyance direction on the first conveyance width direction side, and

the second conveyor part is a roller conveyor including a plurality of second rollers arranged in the conveyance direction and

each of the second rollers has a rotation axis inclined downstream in the conveyance direction on the second conveyance width direction side.

Fig.1

Fig.2

Fig.3

## Fig.4

EP 4 592 221 A1

# Fig.5

EP 4 592 221 A1

Fig.6

# EP 4 592 221 A1

## INTERNATIONAL SEARCH REPORT

International application No.

**PCT/JP2023/033558**

**A. CLASSIFICATION OF SUBJECT MATTER**

***B65G 47/31***(2006.01)i
FI: B65G47/31 B

According to International Patent Classification (IPC) or to both national classification and IPC

**B. FIELDS SEARCHED**

Minimum documentation searched (classification system followed by classification symbols)

B65G47/31

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2006-327758 A (MARUYASU KIKAI KK) 07 December 2006 (2006-12-07) paragraphs [0022]-[0034], fig. 1-6 | 1, 3, 5-7 |
| A | paragraphs [0022]-[0034], fig. 1-6 | 2, 4 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 November 2023** | **05 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

21

INTERNATIONAL SEARCH REPORT
Information on patent family members

International application No.

**PCT/JP2023/033558**

| Patent document cited in search report | Publication date (day/month/year) | Patent family member(s) | Publication date (day/month/year) |
|---|---|---|---|
| JP      2006-327758      A | 07 December 2006 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010100398 A